# EUROPÄISCHE PATENTSCHRIFT

(11) **EP 2 027 044 B1**
(45) Veröffentlichungstag und Bekanntmachung des Hinweises auf die Patenterteilung: **31.08.2011**
(21) Anmeldenummer: 07725477.9
(22) Anmeldetag: 23.05.2007
(51) Int. Cl.: B65G 15/02, B65G 21/06

(54) **KURVENGURTFÖRDERER**
CURVED BELT CONVEYOR
CONVOYEUR À BANDE COURBE

(30) Priorität: 23.05.2006 DE 102006024536
(43) Veröffentlichungstag der Anmeldung: 25.02.2009
(73) Patentinhaber: Caljan Rite-Hite ApS, 8361 Hasselager (DK)
(72) Erfinder: SCHÖNING, Uwe, B., 31141 Hildesheim (DE); GRUTZA, Bernd, 30519 Hannover (DE)
(74) Vertreter: Niederkofler, Oswald
(86) Internationale Anmeldenummer: PCT/EP2007/004577
(87) Internationale Veröffentlichungsnummer: WO 2007/134854

(56) Entgegenhaltungen:
- DE-A1- 19 535 757
- JP-A- 2001 122 413
- JP-A- 2005 008 376
- US-A1- 2004 035 685

## Beschreibung

Die Erfindung betrifft einen Kurvengurtförderer.

Aus dem Stand der Technik ist eine Vielzahl an unterschiedlichsten Kurvengurtförderern zur Beförderung von insbesondere Stückgut auf einem bandähnlichen Gurt bekannt.

DE 695 15 605 T2 offenbart u. a. einen Förderer, versehen mit einem eine Kurve beschreibenden endlosen Fördergurt, welcher nahe seinen Enden über Walzen geführt wird, die in einem Rahmen gelagert sind und während des Betriebs angetrieben werden können, wobei ein Kragen nahe einer Kante des Gurtes, welcher an der Außenseite der Kurve angeordnet ist, vorgesehen ist, wobei der Kragen mit Führungsrollen in Eingriff steht, welche in Gruppen zu je zwei Führungsrollen, welche übereinander positioniert sind, angeordnet sind und über den Kragen auf Gurtteile, welche übereinander positioniert sind, einwirken, wobei jede Gruppe aus zwei Führungsrollen von einem Träger getragen wird, der in der Lage ist, eine zu den Gurtteilen parallele Bewegung auszuführen, und wobei Federmittel auf den Träger einwirken und versuchen, den Träger derart zu bewegen, daß die Führungsrollen, welche vom Träger getragen werden, gegen den Kragen gedrückt werden, wobei der Kragen an der Außenseite des Gurtes angeordnet ist und eine Trägerrolle, die am Träger befestigt ist, nahe den Eingriffspunkten der Führungsrollen am Kragen mit den Innenseiten der Gurtteile in Eingriff steht.

DE 697 19 923 T2 offenbart unter anderem eine Fördervorrichtung, umfassend einen Rahmen und ein Endlosförderband, das eine Biegung beschreibt, wobei das Förderband in der Nähe seiner Enden über Umkehrrollen geführt ist, die im Rahmen gelagert und um Drehachsen drehbar sind, die einen Winkel zueinander einschließen, wobei das Endlosförderband mit einem vorstehenden Ansatz an der Außenseite der Biegung versehen ist, mit den Leitrollen in Kontakt stehen, wobei eine Leitrolle, die unter dem Band vorhanden ist, und eine Leitrolle, die über dem Band vorhanden ist, mit einem Halteglied verbunden sind, das eine Halterolle für das Förderband frei drehbar hält, wobei die Halterolle zwischen dem oberen Teil des Förderbandes und dem unteren Teil davon angeordnet ist, und wobei Federmittel vorgesehen sind, die auf das Halteglied so einwirken, daß die Leitrollen, die mit dem Halteglied verbunden sind, eine Kraft übertragen, die von der Innenseite der Biegung weg gegen das Band gerichtet ist, wobei die zwei Leitrollen durch eine gemeinsame Halterung gehalten sind, die zu einer Schwenkbewegung bezüglich des Haltegliedes um einen Schwenkzapfen in der Lage ist, der die Drehachse der Halterolle zumindest im wesentlichen senkrecht schneidet.

In DE 295 02 064.4 ist ein Kurvengurtförderer einer Förderbandanlage offenbart, mit einem über Tragrollen umgelenkten endlosen Fördergurt mit einer Randleiste am Außenrand, welche zwischen stationären, längs der Kurve paarweise angeordneten Rollen geführt ist, und wobei die Rollen an einzelnen in einem Bandlaufgerüst befestigten Haltern angeordnet sind, wobei jeweils eine Rolle eines Rollenpaares von der Randleiste wegschwenkbar gestaltet ist. Bei dieser Ausgestaltung ist es nachteilig, daß bei einer größeren Reparatur - unabhängig von einem ggf. notwendigen Fördergurtwechsels - hier eine Vielzahl an Bauteilen auseinandergenommen werden müssen, welches mit einem hohen Zeit- und somit Kostenaufwand verbunden ist.

Selbiger Nachteil liegt auch bei der in DE 195 47 893 A1 offenbarten Ausführungsform vor, bei der ein Kurvengurtförderer mit einem über Umlenkrollen geführten, motorisch angetriebenen Endlosfördergurt aufgezeigt wird, der einen längs seines den Außenradius der Kurve bildenden Randes verlaufenden sowie über die Gurtebene vorstehenden Randwulst besitzt, und bei dem die Kompensation der infolge des Kurvenverlaufs auftretenden Längs- und Querkräfte mittels frei drehbar gelagerter Stützrollen erfolgt, die an einer dem Außenradius zugeordneten äußeren Seitenwange der Gurtkurve in Förderrichtung beabstandet voneinander angeordnet sind und auf der zum Innenradius der Kurve hinweisenden Seite an dem fest mit dem Fördergurt verbundenen und mit diesem umlaufenden Randwulst angreifen, wobei die Stützrollen aus ihrem am Randwulst des Fördergurtes angreifenden Stützpositionen in den Randwulst und damit den Fördergurt freigebene Stellungen betätigbar sind und die dem Innenradius der Kurve zugeordnete inneren Seitenwange von einem die Gurtkurve aufnehmenden Traggestell lösbar ist sowie eine Längen- und Breitenerstreckung derart aufweist, daß der Fördergurt ohne Demontage der inneren Seitenwange über diese in Richtung zum Kurvenzentrum von den Umlenkrollen abziebar bzw. in umgekehrter Richtung montierbar ist.

Aus JP 2001-122413A ist ebenfalls ein Kurvengurtförderer mit Führungsrollen an einem Rollenhalter bekannt. Die Schwenkachse eines Rollenhalters liegt in einer Ebene, die senkrecht zu einer Ebene liegt, in der die Drehachsen der Führungsrollen liegen.

Aufgabe der vorliegenden Erfindung ist es, einen verbesserten Kurvengurtförderer bereitzustellen, der insbesondere einen schnellen Förderguriwechsel ermöglicht.

Diese Aufgabe wird erfindungsgemäß durch einen Kurvengurtförderer nach Anspruch 1 gelöst.

Der erfindungsgemäße Kurvengurtförderer weist einen mit Rollen geführten Fördergurt auf, der im Bereich des den Außenradius zur Kurve bildenden Randes ein Angriffselement, beispielsweise und insbesondere in Form einer Gummiwulst, aufweist, das von mindestens einer an einem Rollenhalter befestigten Führungsrolle, den Fördergurt führend, angreifbar ist. Beispielsweise und insbesondere greifen mehrere zum Außenradius der Kurve angreifende und den Gurt nach außen ziehende Führungsrollen , durch ihre Diagonalstellung an der Wulst fahrend, an und sorgen so für eine entsprechende Führung des Fördergurtes innerhalb der Kurve. Dabei ist die Führungsrolle und/oder der Rollenhalter vom Fördergurt weg und zum Fördergurt hin bewegbar ausgestaltet, beispielsweise und insbesondere verschiebbar und/oder verschwenkbar, wobei der Rollenhalter einteilig ausgebildet ist.

Unter Einteiligkeit des Rollenhalters sind erfindungsgemäß auch Ausführungsformen zu verstehen, bei denen der Rollenhalter nicht nur einteilig im klassischem Sinne ist, sondern auch aus mehreren Teilen bestehen kann, diese jedoch unverlierbar miteinander verbunden sind, somit quasi einteilig sind.

Durch diese Ausgestaltung ist eine flexible Anpassung an unterschiedliche Gurtdicken und Stärken der Führungswulst möglich, bei gleichzeitig schneller Wechselbarkeit des Gurtes. Die Teilevielfalt wurde reduziert, was bei einem Auswechseln des Gurtes oder bei einer größeren Reparatur vorteilhaft ist und bei gleichzeitiger Unverlierbarkeit von Teilen der/des Rollenhalter/s zu einer erheblichen Zeit- und Kostenreduzierung führt.

Darüber hinaus ist es erfindungsgemäß, dass mindestens eine Führungsrolle exzentrisch bezüglich eines Drehpunktes des Rollenhalters bzw. eines Teils des Rollenhalters gelagert ist, so daß eine kontrollierte Verschwenkbarkeit, nämlich wenn an einem Schwenkelement eine Führungsrolle angeordnet ist, über ein Schwenkelement, insbesondere einen Schwenkhebel, ermöglicht wird. Bei einer solchen Ausgestaltung ist der Schwenkhebel drehbar mit dem Rollenhalter verbunden, wobei die Führungsrolle in Bezug auf die Drehbarkeit der Führungsrolle selbstzentrisch (also ohne eigene Exzentrizität) drehbar verbunden ist, so daß über die Verschwenkbarkeit des Schwenkhebels somit eine exzentrische Lagerung in Bezug auf den Drehpunkt des Rollenhalters, also hier in bezug auf den Drehpunkt des am Rollenhalter angelenkten Schwenkhebels, gegeben ist.In den meisten Fällen ist die Führung der Führungsrolle selbtstzentrisch ausgestaltet, um einen möglichst ruhigen gleichmäßigen Lauf zu gewährleisten.

Der Fördergurt selbst besteht beispielsweise und insbesondere aus einem ein- oder mehrlagigen Textilgewebe mit einer Beschichtung aus Gummi oder anderen elastomeren Materialien, wie beispielsweise PVC (Polyvinylchlorid) oder PU (Polyurethan).

Die Führungsrollen selbst bestehen in der Regel aus geschützten Präzisionskugellagern.

Die Rollenhalter bestehen in der Regel aus Aluminium oder entsprechenden Aluminiumlegierungen und/oder aus profilierten Stahlblechformteilen.

Die Rollenhalter können einseitig Laschen für die Aufnahme der Lagerung erhalten oder versetzt angeordnete Laschen, wobei dann Ober- und die Unterseite gegenüberliegend angeordnet sind. Bei einer vorteilhaften alternierenden, also wechselseitigen, insbesondere bezüglich einer zur Bewegungsebene zumindest nahezu lotrechten Achse, Anordnung der obertrumigen und untertrumigen Führungsrollen bezüglich eines Beförderungsabschnittes wird die Zugänglichkeit bei Wartung und Reparatur zusätzlich verbessert.

In der Praxis hat es sich bewährt, daß die Führungsrolle verschwenkbar und/oder verschiebbar ist, beispielsweise und insbesondere über Gelenke bzw. Langlöcher, die beispielsweise und insbesondere auch gebogen sein können, so daß eine schnelle und einfache Bewegbarkeit vom Fördergurt weg und zum Fördergurt hin ermöglich wird. Hierbei ist es denkbar, jedoch nicht zwingend, daß bei der Bewegbarkeit vom Fördergurt weg und zum Fördergurt hin, wenn dieser zum Boden parallel, somit waagerecht, ausgerichtet ist, die Führungsrolle bei ihrer Bewegung zumindest im Bewegungsvektorendiagramm einen Bewegungsvektor in senkrechter Richtung aufweist, somit die Führungsrolle nach oben bzw. nach unten bewegt wird. Entsprechendes gilt auch für den Rollenhalter bzw. für einen Teil des Rollenhalters, wobei im Falle der Bewegbarkeit von Führungsrolle und Rollenhalter bzw. für einen Teil des Rollenhalters eine hochgradige Flexibilität an unterschiedlicher Kurvengurte vorhanden ist und für die verschiedensten Führungsrollen und Applikationen durch entsprechende Einstellung von Fördergurt und Rollenhalter ein schneller und kostengünstiger Wechsel des Fördergurtes bzw. entsprechende Einstellungen auf die gegebenen Verhältnisse bewerkstelligbar ist.

Weiterhin ist es von Vorteil, wenn die Führungsrolle Kugellager aufweist, da dies einen im Betrieb ruhigen Lauf der Führungsrolle gewährleistet.

Zur noch sichereren Führung des Fördergurtes in der Kurve des Kurvengurtförderers ist der Führungsrolle eine auf der gegenüberliegenden Seite des Fördergurtes weitere Führungsrolle, somit ein Führungsrollenpaar bildend, angeordnet, das den Fördergurt somit von oben wie auch von unten über das Angriffselement, insbesondere die Gummiwulst, angreift.

Es ist von Vorteil, wenn das Schwenkelement mittels eines Antriebselementes in einer Position fixierbar ist, beispielsweise und insbesondere über einen in ein Loch des Rollenhalters einführbaren Bolzen.

Bei dieser Ausgestaltung ist es weiterhin von Vorteil, wenn das Schwenkelement, insbesondere der Schwenkhebel, in vorbestimmten Positionen reversibel fixierbar ist, beispielsweise wenn der Schwenkhebel in einer Führungsnut des Rollenhalters läuft, wobei an der Führungsnut Auflaufpositionen in Form von linienförmigen Materialerhebungen gegeben sind, so daß ein Auflaufen gegen eine solche linienförmige Materialerhebung bereitgestellt wird, die jedoch mit einigem Kraftaufwand darüber hinweggleitend überwindbar ist. Solche linienförmigen Materialerhebungen können paarweise dicht nebeneinander angeordnet sein, damit eine korrespondierende Materialerhebung des Schwenkhebels sich zwischen diesen beiden Positionen anordnen kann, um eine reversible Fixierung herbeizuführen. Darüberhinaus ist es denkbar, daß lediglich einfache linienförmige Materialerhebungen entweder auf Seiten des Rollenhalters oder auf Seiten des Schwenkhebels und entsprechend korrespondierende Materialausnehmungen zum Eingreifen gegeben sind, um auf diese Art und Weise eine relativ einfache reversible Fixierbarkeit des Schwenkhebels am Rollenhalter zu gewährleisten.

Weiterhin ist es vorteilhaft, wenn der Rollenhalter aus Kunststoff, beispielsweise aus Polyethylen, Polypropylen, Polyvinylclorid, besteht, da dies eine preiswerte Herstellungsmöglichkeit eröffnet und insbesondere eine besonders gewichtsmäßig leichte Ausführungsform im Vergleich zu metallischen Ausführungen darstellt.

Weiterhin ist es vorteilhaft, wenn das Schwenkelement, insbesondere der Schwenkhebel, einteilig ausgebildet ist, auch in Bezug auf mögliche Drehelemente am Schwenkhebel bzw. -element, beispielsweise und insbesondere in Bezug auf eine Gelenkbuchse, in die ein Drehgelenkzapfen eingeführt und fixiert wird, so daß eine Drehung bzw. Verschwenkung des Schwenkhebels am Rollenhalter ermöglicht wird, da die Einteiligkeit des Schwenkelementes große Vorteile in Bezug auf kostengünstige Fertigung aber auch in Bezug auf Zuverlässigkeit mit sich bringt.

Schließlich weist der Kurvengurtförderer vorteilhafterweise eine Gestelleinrichtung auf, die die Grundgeometrie des Kurvengurtförderers vorgibt, so daß dies unabhängig von den Einstellungen der einzelnen Förderrollen konstant bleibt.

Die Erfindung wird anhand der nachfolgenden Zeichnungen beispielhaft erläutert.

In den Figuren zeigen:
- Figur 1 -: skizzenhaft in Draufsicht im Querschnitt den Kurvenbereich eines erfindungsgemäßen Kurvengurtförderers;
- Figur 2 -: skizzenhaft im Querschnitt in Seitenansicht einen Kurvenabschnitt des in Figur 1 gezeigten Kurvengurtförderers;
- Figur 3 -: eine Teil-Detailansicht des in Figur 2 gezeigten Abschnittes;
- Figur 4 -: eine Teil-Detailansicht einer zu Figur 3 gezeigten alternativen Ausführungsform;
- Figur 5 -: eine skizzenhafte Ansicht eines beispielhaften Rollenhalters;
- Figur 6 -: eine skizzenhafte Ansicht eines beispielhaften Schwenkelementes.

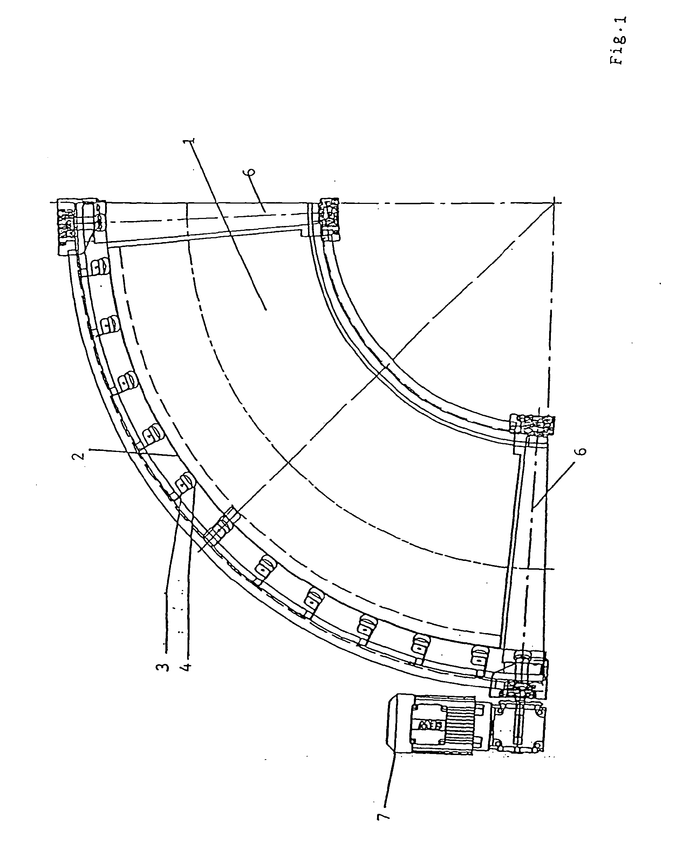

In Figur 1 ist skizzenhaft in Draufsicht querschnittsweise ein erfindungsgemäßer Kurvengurtförderer abgebildet, wobei ein Fördergurt 1, quasi einen Kegelstumpf bildend, über mehrere Führungsrollen 4, die an entsprechenden Rollenhaltern 3 drehbar gelagert sind, ein am Außenradius der Kurve bildenden Rand angeordnetes Angriffselement in Form einer aufgenähten Gummiwulst, den Fördergurt führend, angreifen und diesen aufgrund seiner Endlosigkeit sicher führen.

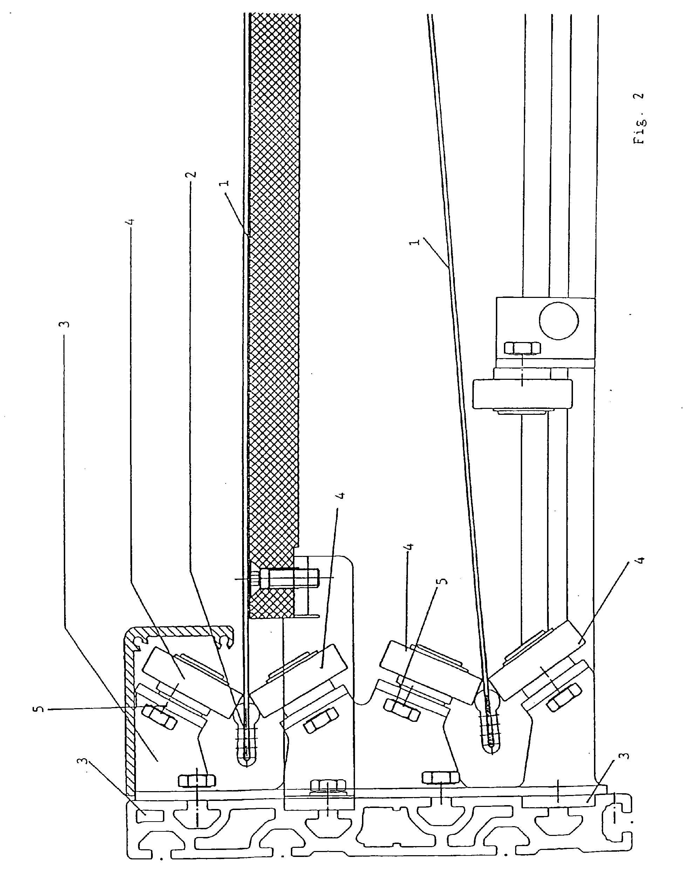

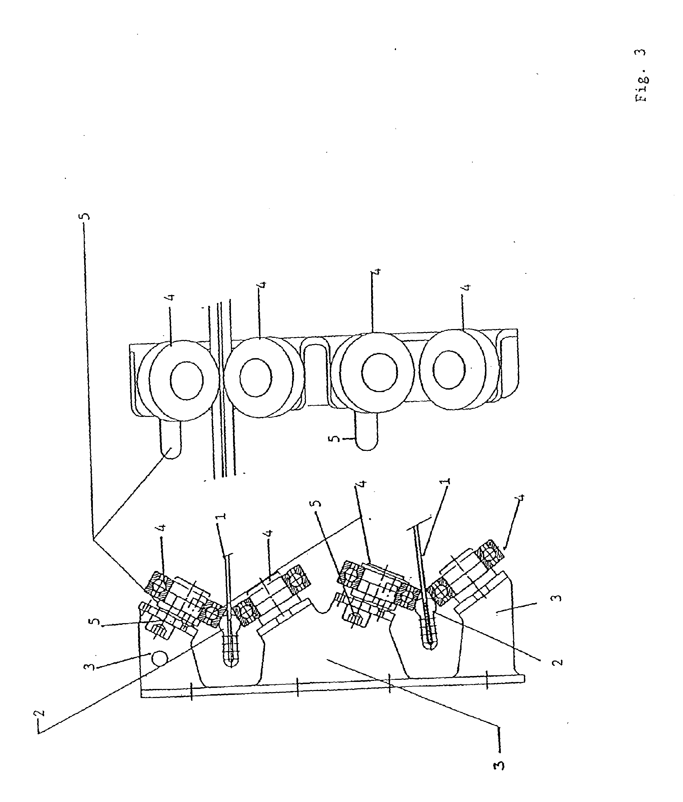

Über die Verschwenkbarkeit der Führungsrollen 4 der in Figur 3 zu erkennenden Schwenkhebel 5, ist der über die Umlenkrollen 6 gespannte und fixierte Fördergurt 1 aufgrund der feinfühligen Einstellbarkeit sicher führbar. Dabei greifen die einzelnen Führungsrollen 4 - wie in Figur 2 gezeigt - jeweils an den entsprechenden Stellen paarweise mit einer vektoriellen Kraftkomponente in Richtung des Außenrandes des Fördergurtes 1 über das wulstartige Angriffselement 2 an, wobei sowohl auf der Obertrum- als auch auf der Untertrumseite des Fördergurtes 1 an den jeweiligen Positionen die obere Führungsrolle über einen jeweiligen Schwenkhebel 5 zum Drehpunkt des Schwenkhebels am Rollenhalter 3 exzentrisch und somit verschwenkbar (nach oben und nach unten) ist. Erfindungsgemäß ist der Rollenhalter 3 einteilig ausgebildet und liegt als spezielles Formteil vor, damit dieses in die Gestelleinrichtung des Kurvengurtförderer fixiert ist.

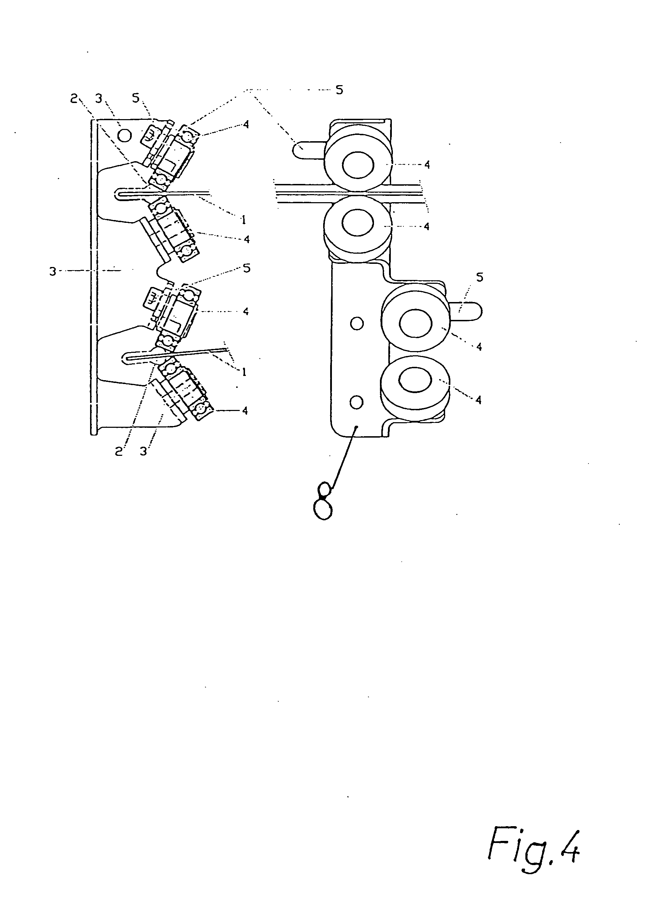

Bei der in Figur 4 gezeigten Ausführungsform sind die paarweisen Führungsrollen 4 alternierend, also zueinander wechselseitig, über ein unverlierbares, genietetes zusätzliches Halteteil 8 angeordnet, so daß sich eine besonders komfortable Zugänglichkeit bei Wartung und Reparatur ergibt.

Eine Antriebseinheit 7 in Form eines Motors treibt über eine Antriebswelle die Umlenk- und in diesem speziellen Fall auch eine der beiden Antriebsrollen 6 an.

Aufgrund der kegelstumpfartigen Mantelfläche des Fördergurtes 1 wird die Untertrumseite des Fördergurtes 1 im Querschnitt gesehen - wie in Figur 2 zu erkennen - in Richtung Außenrand der Kurve leicht schräg nach unten, somit die Gurtseiten straffend geführt, um eine Materialverwellung zu vermeiden.

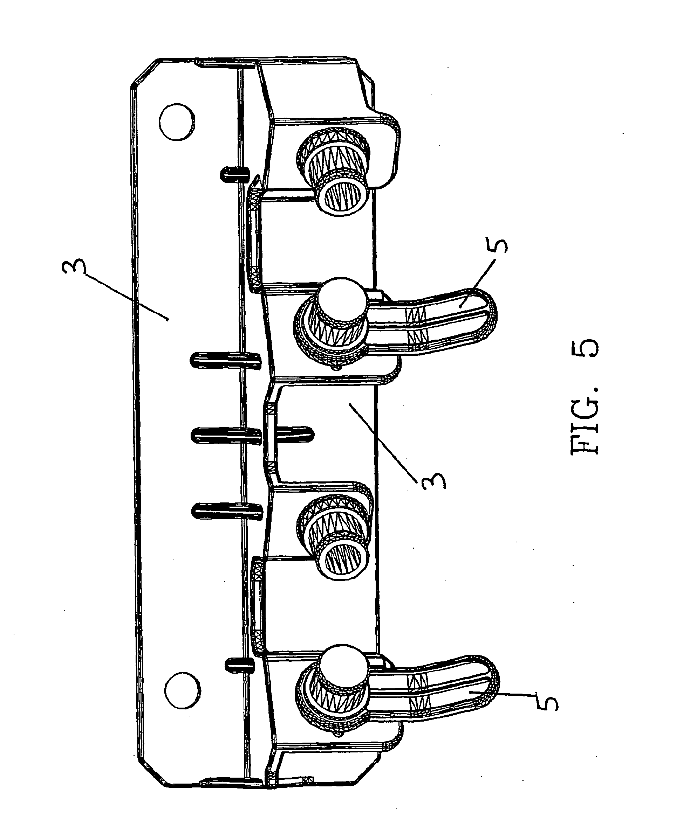

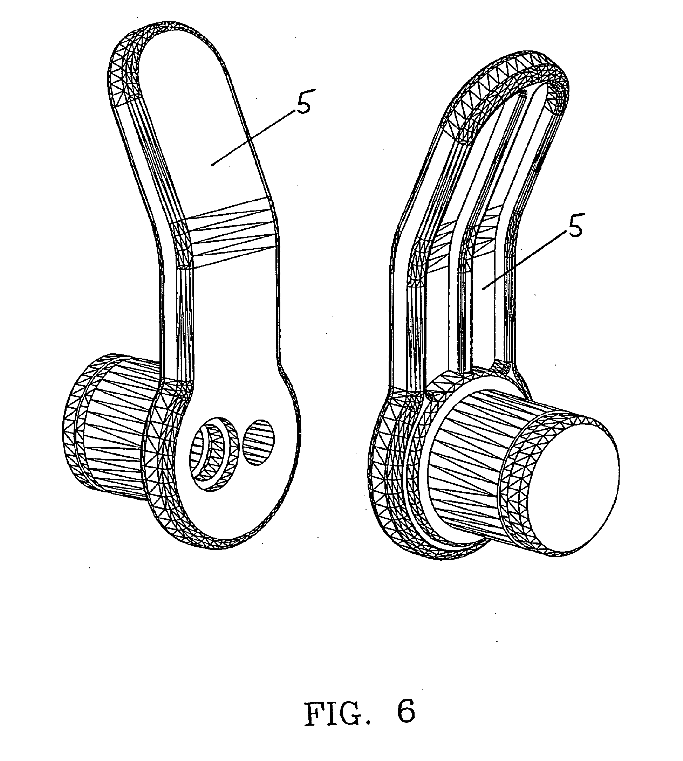

In Figur 5 ist beispielhaft ein Rollenhalter 3 dargestellt, der vollständig als Spritzgußteil aus Kunststoff gefertigt worden ist. Zu erkennen sind die auch teilweise schon angebrachten Schwenkhebel 5. Diese sind einstückig auch als Spritzgußteil gefertigt (s. Figur 6).

## Patentansprüche

1. Kurvengurtförderer mit einem rollengeführten Fördergurt (1), der im Bereich des den Außenradius der Kurve bildenden Randes ein Angriffselement (2) aufweist, das von mindestens einer, an einem Rollenhalter (3) befestigten Führungsrolle (4), den Fördergurt (1) führend, angreifbar ist, wobei
der Rollenhalter (3) hinsichtlich der obertrumigen und untertrumigen Seite des Fördergurts (1) einteilig ausgebildet ist,
ein Schwenkelement (5) verschwenkbar an dem Rollenhalter (3) angeordnet ist; mindestens eine Führungsrolle (4) an dem Schwenkelement (5) mit ihrer Drehachse exzentrisch zur Drehachse des Schwenkelements (5) gelagert ist, und
die Führungsrolle (4) durch Betätigen des Schwenkelements (5) um dessen Drehachse vom Fördergurt (1) weg und zum Fördergurt (1) hin bewegbar ist.

2. Kurvengurtförderer nach Anspruch 1, **dadurch gekennzeichnet, dass** der Rollenhalter (3) oder zumindest ein Teil des Rollenhalters (3) verschwenkbar und/oder verschiebbar ist.

3. Kurvengurtförderer nach einem der Ansprüche 1 bis 2, **dadurch gekennzeichnet, dass** die Führungsrolle (4) Kugellager aufweist.

4. Kurvengurtförderer nach einem der Ansprüche 1 bis 3, **dadurch gekennzeichnet, dass** der Führungsrolle (4) eine auf der gegenüberliegenden Seite des Fördergurtes weitere Führungsrolle (4'), somit ein Führungsrollenpaar bildend, angeordnet ist.

5. Kurvengurtförderer nach einem der Ansprüche 1 bis 4, **dadurch gekennzeichnet, dass** das Schwenkelement (5) mittels eines Arretierelementes in einer Position fixierbar ist.

6. Kurvengurtförderer nach einem der Ansprüche 1 bis 5, **dadurch gekennzeichnet, dass** das Schwenkelement (5) in vorbestimmten Positionen reversibel fixierbar ist.

7. Kurvengurtförderer nach einem der Ansprüche 1 bis 6, **dadurch gekennzeichnet, dass** das Schwenkelement ein Schwenkhebel (5) ist.

8. Kurvengurtförderer nach einem der Ansprüche 1 bis 7, **dadurch gekennzeichnet, dass** dieser eine die Grundgeometrie des Kurvengurtförderers vorgebende Gestelleinrichtung aufweist.

9. Kurvengurtförderer nach einem der Ansprüche 1 bis 8. **dadurch gekennzeichnet, dass** die obertrumigen und untertrumigen Führungsrollen (4) bezüglich eines Beförderungsabschnittes des Kurvengurtförderers alterierend angeordnet sind.

10. Kurvengurtförderer nach einem der Ansprüche 1 bis 9, **dadurch gekennzeichnet, dass** der Rollenhalter (3) aus Kunststoff besteht.

11. Kurvengurtförderer nach einem der Ansprüche 1 bis 10, **dadurch gekennzeichnet, dass** das Schwenkelement einteilig ausgebildet ist.

## Claims

1. Curved belt conveyor with a roller-guided conveyor belt (1) having an engagement element (2) in the region of the edge forming the outside radius of the curve that can be engaged by at least one guide roller (4), which is fastened to a roller holder (3), guiding the conveyor belt (1), wherein
the roller holder (3) is configured in one piece regarding the tight side and slack side of the conveyor belt (1),
a pivot element (5) is pivotably arranged on the roller holder (3),
at least one guide roller (4) is mounted to the pivot element (5) having its rotation axis eccentrically to the rotation axis of the pivot element (5);
the guide roller (4) is movable away from the conveyor belt (1) and towards the conveyor belt (1) by operation of the pivot element (5) around its rotation axis.

2. Curved belt conveyor as claimed in claim 1, wherein the roller holder (3) or at least a part of the roller holder (3) is pivotable and/or movable.

3. Curved belt conveyor as claimed in any one of claims 1 and 2, wherein the guide roller (4) includes ball bearings.

4. Curved belt conveyor as claimed in any one of claims 1 to 3, wherein on the side of the conveyor belt (1) that is opposite to the guide roller (4) another guide roller (4') is provided thereby forming a guide roller pair.

5. Curved belt conveyor as claimed in any one of claims 1 to 4, wherein the pivot element (5) can be fixed in a position by way of a locking element.

6. Curved belt conveyor as claimed in any one of claims 1 to 5, wherein the pivot element (5) can be reversibly fixed in predetermined positions.

7. Curved belt conveyor as claimed in any one of claims 1 to 6, wherein the pivot element (5) is a pivot lever.

8. Curved belt conveyor as claimed in any one of claims 1 to 7, further comprising a frame device that presets the basic geometry of the curved belt conveyor.

9. Curved belt conveyor as claimed in any one of claims 1 to 8, wherein the guide rollers (4) on the slack side and on the tight side are arranged as alternating with regard to a conveying section of the curved belt conveyor.

10. Curved belt conveyor as claimed in any one of claims 1 to 9, wherein the roller holder (3) comprises plastics.

11. Curved belt conveyor as claimed in any one of claims 1 to 10, wherein the pivot element (5) is configured in one pice.

## Revendications

1. Convoyeur à bande courbe comprenant une bande transporteuse (1) guidée par des rouleaux et présentant dans la zone du bord formant le rayon extérieur de la courbe un élément de préhension (2) pouvant être saisi par au moins un rouleau de guidage (4) fixé sur un support de rouleaux (3) de manière à guider la bande transporteuse (1),
le support de rouleaux (3), en ce qui concerne le côté brin supérieur et le côté brin inférieur de la bande transporteuse (1), étant conçu d'un seul tenant,
un élément pivotant (5) disposé de manière pivotante sur le support de rouleau (3) ;
au moins un rouleau de guidage (4) disposé sur l'élément pivotant (5), l'axe de rotation dudit rouleau étant monté de manière excentrique par rapport à l'axe de rotation de l'élément pivotant (5), et
le rouleau de guidage (4) pouvant être déplacé à distance de la bande transporteuse (1) et en direction de la bande transporteuse (1) par actionnement de l'élément pivotant (5) autour de son axe de rotation.

2. Convoyeur à bande courbe selon la revendication 1, **caractérisé en ce que** le support de rouleaux (3) ou au moins une partie du support de rouleaux (3) est pivotant et/ou mobile.

3. Convoyeur à bande courbe selon l'une quelconque des revendications 1 à 2, **caractérisé en ce que** le rouleau de guidage (4) comprend des roulements à billes.

4. Convoyeur à bande courbe selon l'une quelconque des revendications 1 à 3, **caractérisé en ce que** le rouleau de guidage (4) est disposé sur un autre rouleau de guidage (4') sur le côté opposé de la bande transporteuse, formant donc une paire de rouleaux de guidage.

5. Convoyeur à bande courbe selon l'une quelconque des revendications 1 à 4, **caractérisé en ce que** l'élément pivotant (5) peut être fixé dans une position au moyen d'un élément de blocage.

6. Convoyeur à bande courbe selon l'une quelconque des revendications 1 à 5, **caractérisé en ce que** l'élément pivotant (5) peut être fixé de manière réversible dans des positions prédéfinies.

7. Convoyeur à bande courbe selon l'une quelconque des revendications 1 à 6, **caractérisé en ce que** l'élément pivotant est un levier pivotant (5).

8. Convoyeur à bande courbe selon l'une quelconque des revendications 1 à 7, **caractérisé en ce que** celui-ci comprend un dispositif bâti prédéfinissant la géométrie de base du convoyeur à bande courbe.

9. Convoyeur à bande courbe selon l'une quelconque des revendications 1 à 8, **caractérisé en ce que** les rouleaux de guidage côté brin supérieur et côté brin inférieur (4) sont disposés en alternance par rapport à une section d'acheminement du convoyeur à bande courbe.

10. Convoyeur à bande courbe selon l'une quelconque des revendications 1 à 9, **caractérisé en ce que** le support de rouleaux (3) est constitué de matière plastique.

11. Convoyeur à bande courbe selon l'une quelconque des revendications 1 à 10, **caractérisé en ce que** l'élément pivotant est conçu en une seule pièce.
